# EUROPEAN PATENT APPLICATION

(11) **EP 0 926 325 A2**
(43) Date of publication of application: **30.06.1999**
(21) Application number: 98310232.8
(22) Date of filing: 14.12.1998
(51) Int. Cl.: F02C 9/26, F02C 9/28, F23N 5/16

(54) **Apparatus for use with a liquid fuelled combustor**

(30) Priority: 23.12.1997 US 996706
(71) Applicant: UNITED TECHNOLOGIES CORPORATION, Hartford, CT 06101 (US)
(72) Inventor: Cohen, Jeffrey Mark, Tolland, Connecticut 06248 (US); Jacobson, Clas A., Tolland, Connecticut 06084 (US); Peracchio, Aldo A., South Windsor, Connecticut 06074 (US); Rey, Nancy Mary, Glastonbury, Connecticut 06033 (US)
(74) Representative: Leckey, David Herbert

(57) **Abstract**

An apparatus for use in a system having a liquid fuel supply (100) and a combustor (48) includes a fuel actuator (130), a controller (34), and a premixer (44). The controller generates a command signal indicative of actuation sought from the fuel actuator (130). The actuator receives liquid fuel from the liquid fuel supply and provides liquid fuel at a modulated rate of flow in response to the command signal. The premixer receives the fuel from the actuator, mixes the fuel with air, and provides the mixture to the combustor. The system is preferably a gas turbine power plant.

A controller for use in such a system may include means for determining the actuation sought from the fuel actuator to cause the actuator to provide liquid fuel at the modulated flow rate, and means for generating a command signal indicative of said actuation sought from the fuel actuator.

## Description

The invention relates to combustors and more particularly to apparatus for use with combustors employing premixed liquid fuel/air mixtures.

Gas turbine engines are well known. A typical gas turbine engine has an annular axially extending flow path for conducting working fluid sequentially through a compressor section, a combustion section, and a turbine section. The combustion section mixes the working fluid, typically air, with fuel and ignites the fuel/air mixture.

Gas turbine engines typically burn fossil fuels. An undesired result of this combustion is the formation of nitrogen oxides, frequently referred to as NOx. Nitrogen oxides are pollutants capable of causing health and environmental problems. Government standards establish limits on the amounts of NOx that may be discharged into the air.

The rate of NOx production within the gas turbine engine depends on the temperature within the combustion chamber. The greatest temperature and the greatest rate result when the combustible fuel/air mixture has a stoichiometric fuel to air ratio, commonly referred to as "stoichiometric" mixture. A mixture having a fuel to air ratio that is less than stoichiometric, commonly referred to as a "lean" mixture, results in a lower temperature and a lower rate than that of a stoichiometric mixture. Increasing the leanness of a lean mixture results in an even lower temperature and an even lower rate of NOx production.

When using a lean mixture to attain a low rate of NOx production it is desirable to mix the liquid fuel and a large fraction of the air before they reach the combustor. This approach, commonly referred to as "premixing", uses a premixer to increase the uniformity of the mixture provided to the combustor. The fuel spends enough time within the premixer to ensure that it adequately atomizes, evaporates, and mixes with the air. This time, typically referred to as residence time, might be about 1 or 2 milliseconds (msec) but is more commonly about 4 msec. Without premixing, some regions within the combustor end up with an extremely lean mixture while others end up with a less lean, i.e. a richer or closer to stoichiometric, mixture. Greater uniformity in the fuel to air ratio of the mixture results in a lower peak temperature within the combustor and hence less NOx.

However, even when premixing is employed, other considerations can effectively limit the leanness of the mixture. Mixtures that are too lean do not permit sustained combustion and ultimately result in a "flame-out" condition commonly referred to as "lean blowout". Furthermore, mixtures having a slightly higher fuel to air ratio enable sustained combustion but can result in oscillations in both the magnitude of the pressure and the heat release rate within the combustor. In some situations, the time relationship between these two oscillations is such that the oscillations in the magnitude of the combustor pressure cause an increase in the amplitude of oscillation in the heat release rate, and visa versa. This condition, commonly referred to as combustion instability, causes large oscillations in the magnitude of the pressure within the combustor. The repetition rate (frequency) of these oscillations depends on the application. For industrial gas turbine engines the frequency is typically within a range from about 100 Hertz (Hz) to about 700 Hz, most often around 200 Hz. Thus, the period is most often about 5 msec. The presence of combustion instability can lead to problems including engine damage. The possibility that combustion instability will occur could preclude the use of a fuel to air ratio that is only slightly above the lean blowout limit.

One technique for passive control of combustion instability involves injection of a secondary, or pilot, fuel mixture into a side wall of the combustor. US Patent No. 5,263,325 to McVey et al. discloses an example of this technique. However, the use of pilot fuel injection cannot sufficiently reduce combustion instability without also causing a significant increase in the rate of NOx production.

Several references disclose active control of combustion instability. For example, U.K. Patent Application GB-A-2239691 discloses an active control which uses a pressure transducer to measure pressure fluctuations in the combustion chamber and a servovalve to modulate the amount of fuel supplied for combustion. US Patent No. 5,145,355 issued to Poinsot et al. discloses an apparatus that detects combustion instability and modulates the flow of fuel injected into the chamber as a function of the instability. US Patent No. 5,575,144 issued to Brough discloses a system that senses pressure pulses in the combustor, calculates a cancellation pulse to offset a predominate pressure pulse, and periodically extracts metered volumes of air from the combustor to produce a cancellation pulse. However, none of these references suggest the use of such systems with a combustor that burns a premixed liquid fuel/air mixture.

US Patent No. 5,445,517 to Kondou et al. discloses an adaptive noise silencing system for a combustor. The system computes an anti-phase signal of a combustion noise and inputs the signal to a gas flow control valve, thereby producing a pressure variation in the gas fuel and realizing a pressure variation in the combustion chamber to suppress, by phase interference, the combustion noise. The system employs a mixing chamber between the gas flow control valve and the combustor chamber, but Kondou does not suggest the use of such a system with a combustor that burns a premixed liquid fuel/air mixture.

US Patent No. 5,349,811 issued to Stickler et al. discloses a system for reducing the formation of NOx pollutants. The system "modulate[s]" the fuel delivery rate to the combustor to produce combustor air input flow oscillation and bulk flow oscillation within the combustor which enhances fuel/air homogeneity throughout the combustion chamber and reduces conditions favourable to the formation of NOx. However, Stickler does not suggest the use of such system with a combustor that burns a premixed liquid fuel/air mixture, but rather he uses the system as an alternative to premixing.

Thus it will be seen that, at least in its preferred embodiments, the present invention provides an apparatus that provides a premixed liquid fuel/air mixture having a temporally modulated stoichiometry, i.e., fuel to air ratio, an apparatus for controlling the magnitude of combustion instability in a combustor that burns premixed liquid fuel/air mixtures, an apparatus for controlling the magnitude of oscillations in the pressure within the combustor in a gas turbine engine that burns premixed liquid fuel/air mixtures, and an apparatus that can control the magnitude of combustion instability without significantly increasing the rate of NOx production within the combustor.

According to a first aspect of the present invention, an apparatus for use in a system having a liquid fuel supply and a combustor includes a fuel actuator, a controller, and a premixer. The controller generates a command signal indicative of actuation sought from the fuel actuator. The actuator receives liquid fuel from the liquid fuel supply and provides liquid fuel at a modulated rate of flow in response to the command signal. The premixer receives the fuel from the actuator, mixes the fuel with air, and provides the mixture to the combustor.

The system may be a gas turbine power plant, and the apparatus may additionally comprise a gas turbine engine including a burner having said premixer and a combustor. The premixer receives the fuel from the actuator, mixes the fuel with air, and provides the mixture to the combustor.

According to a second aspect of the present invention, a controller for use in system having a fuel actuator that receives liquid fuel and a command signal and provides, in response to the command signal, liquid fuel at a modulated flow rate to a premixer that receives the modulated liquid fuel flow from the fuel actuator, mixes the liquid fuel with air, and provides the liquid fuel and air mixture to a combustor, includes means for determining the actuation sought from the fuel actuator to cause the actuator to provide liquid fuel at the modulated flow rate, and means for generating a command signal indicative of said actuation sought from the fuel actuator.

As used herein, the term modulation does not include quasi-steady operation such as that universally employed within gas turbine engines to change the rate of fuel flow to the burner in response to a change in an engine operating condition. Those fuel rate changes typically occur very slowly, often over a duration of many seconds or even minutes. Contrast the modulated fuel rate of the present invention which changes at a periodic rate, typically hundreds of Hz.

While systems employing modulation of the fuel flow rate to a combustor are known, until now, it was believed that such modulation could not be used with a combustor that burns a premixed liquid fuel/air mixture. The purpose of a premixer is to mix, thus, it was believed that the premixer would in effect neutralize, i.e., smooth, the modulations. Neutralization would even more certainly occur if the residence time of the fuel within the premixer is on the same order of magnitude, or greater, as the period of the modulation, or if the modulated fuel flow rate comprised only a portion, e.g., one half, one third, or one sixth, of the total fuel flow rate to the premixer. However, it has been determined that premixing is not inappropriate to modulation of the fuel flow rate, i.e. that a modulated fuel flow rate can be used with a combustor that burns a premixed liquid fuel/air mixture.

Preferred embodiments of the invention will now be described by way of example only and with reference to the accompanying drawings, in which:
FIG. 1 is a simplified schematic view of a gas turbine power plant in which the present invention may be used;
FIG. 2 is a partial side view, partial cross sectional view of a premixing fuel nozzle and a simplified schematic representation of a liquid fuel actuator, a controller, and a sensor used in a preferred embodiment of the present invention;
FIG. 3 is a cross sectional view, taken along the line 3-3, of the premixing fuel nozzle of FIG. 2;
FIG. 4 is a graph illustrating the magnitude of the oscillations in the combustor pressure during a period of typical combustion instability;
FIG. 5 is another graph illustrating the magnitude of the oscillations in the combustor pressure during a period of typical combustion instability;
FIG. 6 is a simplified flowchart of a control algorithm used in the preferred embodiment of the present invention;
FIG. 7 is a graph illustrating the magnitude of the oscillation in the combustor pressure, with and without the use of a preferred embodiment of the present invention; and
FIG. 8 is a graph illustrating the magnitude of the oscillations in the combustor pressure and the amount of NOx produced, with and without the use of a preferred embodiment of the present invention.

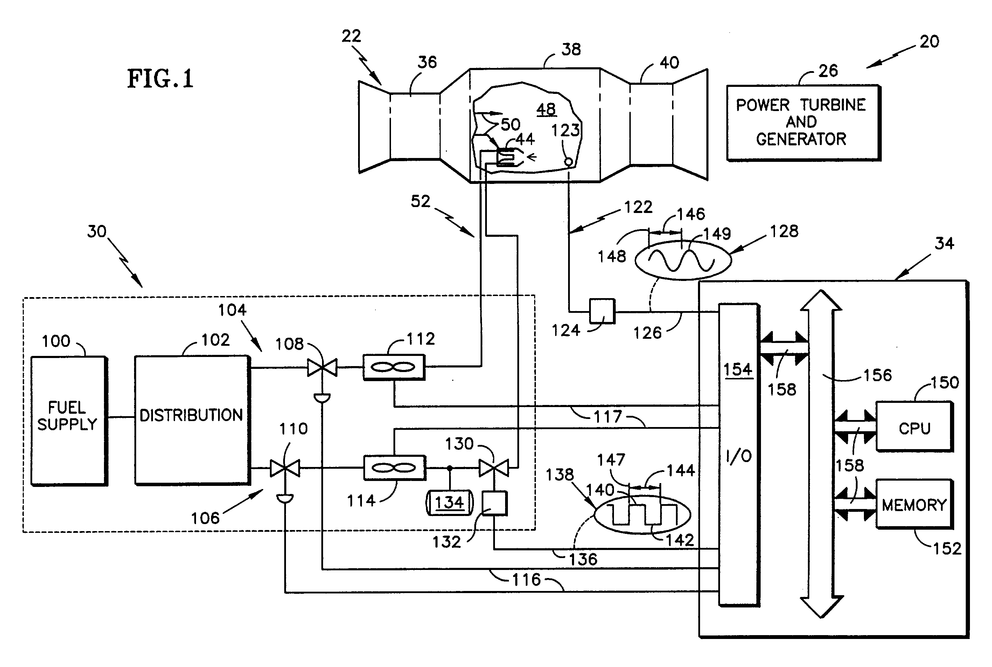

The present invention is disclosed with respect to an embodiment for use in a gas turbine power plant of the type illustrated in FIG. 1. Referring now to FIG. 1, a gas turbine power plant 20 includes a gas turbine engine 22, a power turbine and generator 26, a fuel system 30, and an engine control 34. The gas turbine engine receives fuel from the fuel system 30 under direction of the engine control 34, and burns the fuel to thereby power the power turbine and generator 26.

The gas turbine engine 22 includes a compressor 36, a burner 38 (shown partially broken away for clarity), and a turbine 40. The burner 38 typically includes a plurality, e.g. sixteen, of premixers represented by a premixer 44, and a combustor 48. The premixers 44 may be circumferentially spaced around an upstream end of the burner 38. The combustor 48 is preferably annular and downstream of the premixers 44. The premixers receive and mix compressed air 50 from the compressor 36 with fuel, provided by way of a plurality of fuel lines 52, from the fuel system 30. The premixers 44 ideally provide a mixture that is spatially substantially uniform to the combustor 48 which then burns it. Supplying the combustor 48 with a uniform mixture helps to minimize the rate of NOx production within the combustor.

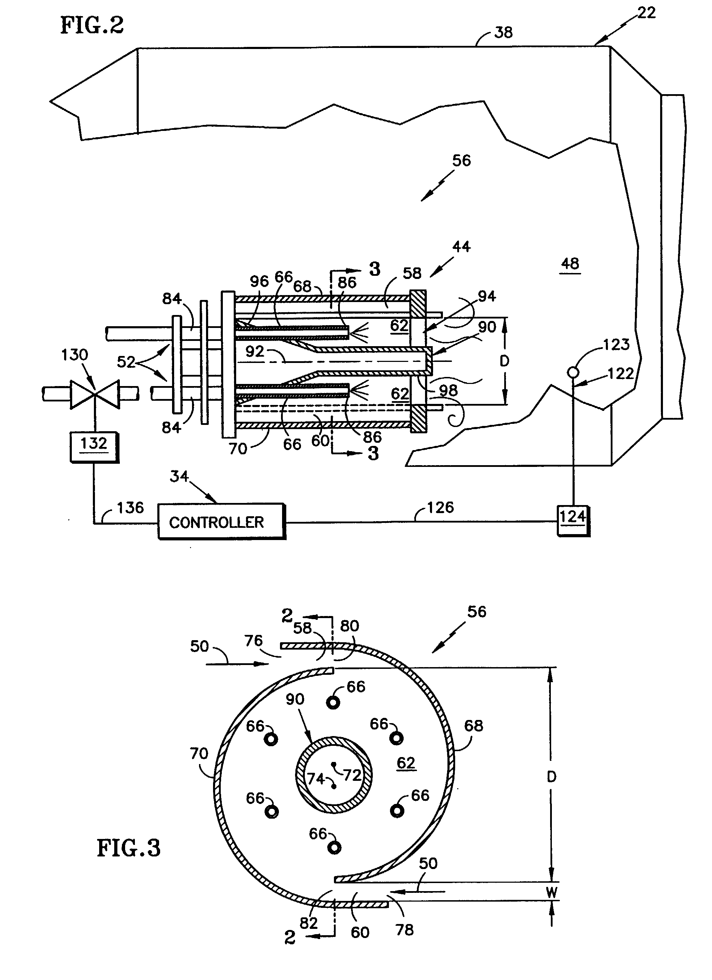

Referring also now to FIGS. 2 and 3, each of the premixers may comprise a tangential air entry premixing fuel nozzle 56. Such nozzles are well known, for example, US Patent No. 5,461,865 to Snyder et al. and US Patent No. 5,479,773 to McCoomb et al. The premixing fuel nozzle 56 may include one or more air passages 58, 60, a mixing chamber 62, and a plurality of fuel tubes (sometimes referred to as spokes) 66. The air passages and mixing chamber may be formed by two partial cylinders 68, 70 having longitudinal axes 72, 74 (FIG. 3) offset from one another. The air passages 58, 60 each have an inlet 76, 78 that receives compressed air 50 from the compressor 36 (FIG. 1) and a vent 80, 82 that communicates with the mixing chamber 62. Each fuel tube 66 has an inlet 84 connected to one of the plurality of fuel lines 52 (FIG. 1) and a spray tip 86 that communicates with the mixing chamber 62. Each fuel tube 66 may receive an equally divided portion of the total fuel flow to the premixing nozzle 56, although this apportionment is not an absolute requirement.

The premixing nozzle 56 further includes a centre body 90, positioned with a longitudinal axis 92 centred radially within the mixing chamber, and an outlet 94. The centre body 90 may be conical at an upstream end 96 and cylindrical at a downstream end 98. Air and fuel mix within the mixture chamber 62 and the mixture exits the nozzle at the outlet 94.

The fuel should spend enough time within the mixing chamber 62 to ensure that it adequately atomizes, evaporates, and mixes with the air. A time period of at least about 3 or 4 msec is preferred, although lesser times, e.g. about 1 or 2 msec, will suffice in some embodiments. The compressed air preferably spends on the order of about 8 milliseconds travelling from the air passage inlets 76, 78 to the outlet 94 of the premixing nozzle 56.

Referring again to FIG. 1, the fuel system 30 may include a liquid fuel supply 100 and a distribution network 102 which supply fuel to a plurality of (i.e. two or more) fuel lines, represented by a first fuel line 104 and a second fuel line 106. Each of the fuel lines 104, 106 may include a regulator 108, 110 and a meter 112, 114. The regulators 108, 110 may be valves, e.g. servo valves, electrically connected to the engine control 34 by way of signal lines 116. The meters 112, 114 may be flow meters, e.g. turbine flow meters, electrically connected to the engine control 34 by way of signal lines 117. The first and second fuel lines 104, 106 connect to the plurality of fuel lines 52 that supply fuel to the premixers 44.

The engine control 34 provides electrical signals that command the regulators 108, 110 and thereby establish the fuel flow rates through the regulators 108, 110. These rates in turn establish the average fuel flow rates through the fuel lines 104, 106 and the average fuel to air ratio of the mixture provided to the combustor 48. The meters 112, 114 provide the engine control with electrical signals indicative of the actual fuel flow rates through the regulators 108, 110. The flow rates through the regulators 108, 110 are typically quasi steady, meaning any change in the rates typically occur very slowly, often over a duration of many seconds or even minutes.

The air to fuel ratio of the mixture is preferably lean, more preferably just slightly above the lean blowout limit. This ratio enables sustained combustion and helps to minimize the rate and amount of NOx produced in the combustor. However, this ratio may result in combustion instability, whereby oscillations in the magnitude of combustor pressure have the effect of increasing the amplitude of the oscillation in the heat release rate, and visa versa. Combustion instability causes large oscillations in the magnitude of the pressure within the combustor.

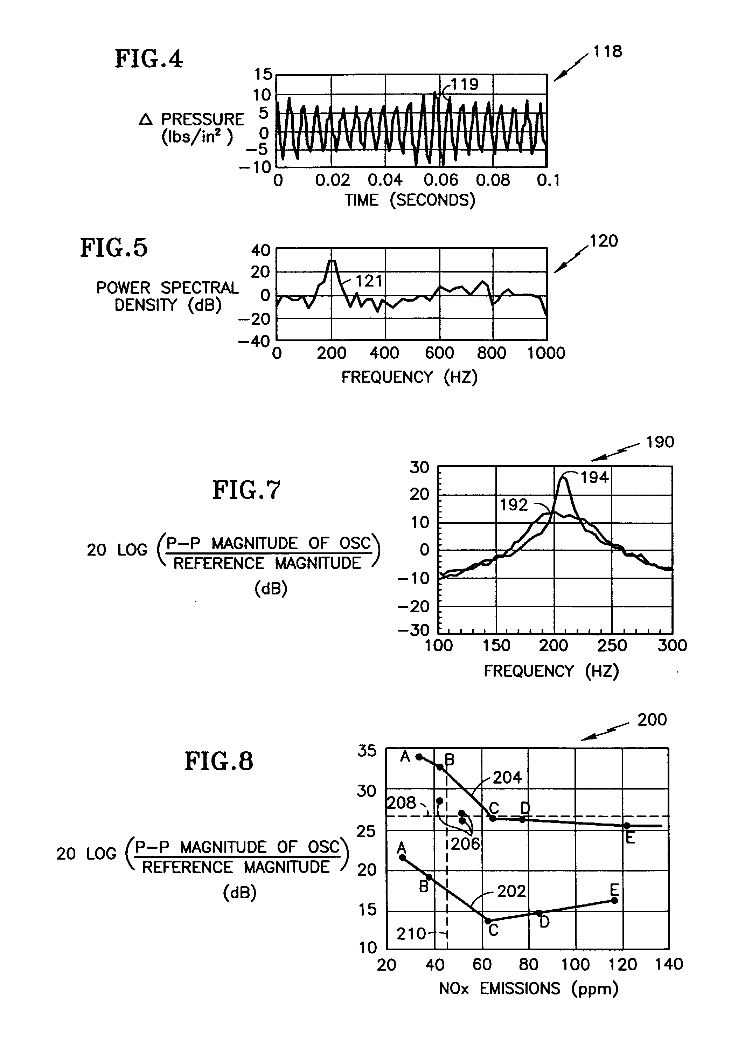

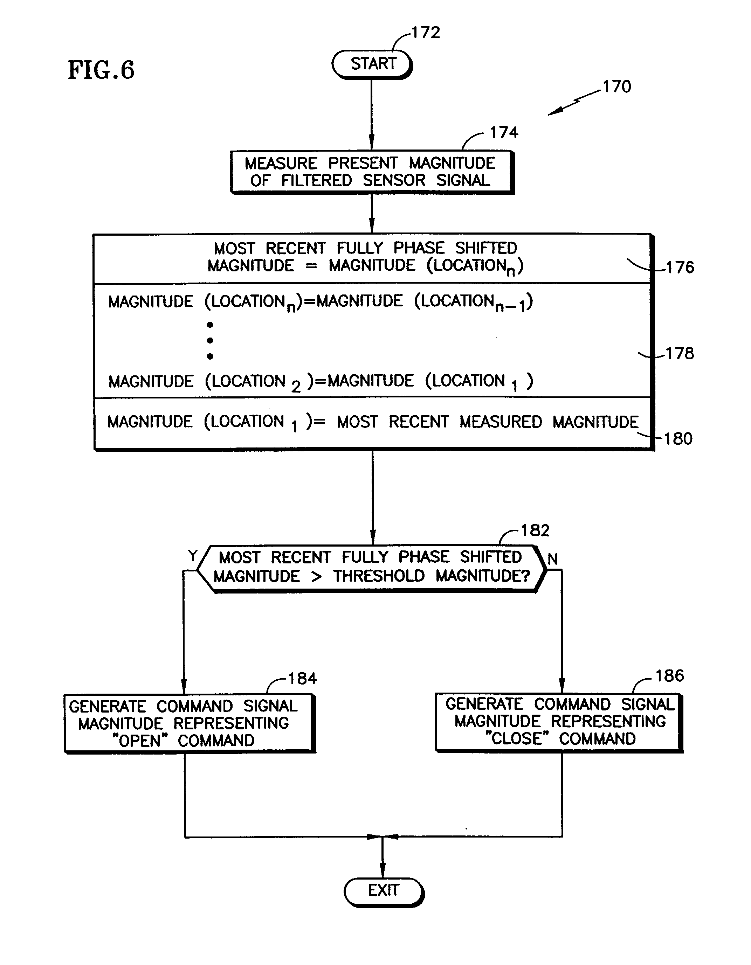

Referring now to FIG. 4, a graph 118 has a curve 119 illustrating that the peak-to-peak magnitude of such oscillation can be on the order of 20 pounds per square inch (psi). Referring now to FIG. 5, a graph 120 has a curve 121 illustrating that the magnitude of the oscillations can be represented as a plurality of frequency components, each having a different magnitude compared to that of the others. Here, the magnitudes are expressed in decibels (dB) relative to a reference magnitude using an equation: 20 log (peak-to-peak magnitude/reference magnitude). The frequency components with highest magnitudes are usually within a relatively narrow frequency range, referred to herein as the fundamental frequency range of the oscillation.

Referring again to FIG. 1, the gas turbine engine 22 further includes a sensor 122 that provides a signal indicative of the presence of combustion instability. In a preferred embodiment the sensor 122 is a pressure sensor that senses the pressure in the combustor, although any other suitable type of sensor may be used, including but not limited to a thermal sensor, a light sensor, or a vibration sensor. The pressure sensor may comprise a probe 123, located within the combustor 48, and a remote transducer 124 electrically connected to the engine control 34 by a signal line 126. The pressure sensor provides a signal having a magnitude, shown simplified over a time duration in a graph 128, indicative of the oscillations in the magnitude of the pressure in the combustor.

The second fuel line 106 further includes a fuel actuator 130 that modulates the fuel flow rate through the second fuel line 106. The fuel actuator may comprise a valve, for example, a solenoid valve, and a valve driver 132 electrically connected to the engine control 34 by way of signal lines 136. The second fuel line 106 may further include an accumulator 134 upstream of the actuator 130 to steady the fuel pressure in the fuel line to the fuel actuator 130. A steady pressure in the fuel line helps the fuel system 30 provide the modulated fuel flow rate through the actuator 130.

The engine controller provides a command signal on line 136 in response to the signal on line 126 from the sensor 122. The command signal commands the actuator 130 and results in a modulated fuel flow rate through the fuel line 106. The modulation of the fuel flow rate effectively alters the time relationship, i.e. the phase relationship, between the oscillations in the magnitude of the combustor pressure and the oscillations in the heat release rate. This alteration brings about a decrease in the coupling between the oscillations and consequently, a decrease in the magnitude of the oscillations in the combustor pressure.

In the preferred embodiment the command signal has a magnitude, shown simplified over a time duration in a graph 138, that represents commands to the valve to periodically "open" 140 and "close" 142. This causes the valve to periodically modulate the fuel flow "on", corresponding to maximum flow rate through the valve, and "off", corresponding to minimum flow rate through the valve. The length of the period 144 of an "on/off" cycle is preferably substantially equal to the length of the period 146 of the oscillation in the magnitude of the combustor pressure. The controller preferably delays, or phase shifts, the start time 147 of an "on/off" cycle relative to the start time 148 of the oscillations in the magnitude of the combustor pressure. The magnitude of the time delay, or phase shift, may be selected so as to result in maximum decrease to the magnitude 149 of the combustor pressure oscillations. The modulation preferably has a duty cycle of about 50%, i.e., "on" for about 50 % of the period 146 and "off" for about 50 % of the period. This duty cycle provides a symmetry similar to that of the typical oscillations in the magnitude of the combustor pressure. It also results in an average fuel flow rate through the actuator 130 that is about one half of the "on" fuel flow rate through the actuator.

In trials, a sub-scale burner (not shown) having only one premixing fuel nozzle was employed. The first fuel line 104 connected to the inlets 84 of five fuel tubes 66 on the fuel nozzle 56 (FIG. 3); the second fuel line 106 connected to the inlet 84 of one fuel tube 66 (FIG. 3). The magnitude of the "on" fuel flow rate through the actuator was set so as to provide, to the fuel tube, an average fuel flow rate substantially equal in magnitude to the fuel flow rate provided to each of the other five fuel tubes. Accordingly, the fuel flow rate from the actuator 130 accounted for 1/6 of the total fuel flow rate to the nozzle 56. The first fuel line 104 provided the other 5/6 of the total fuel flow rate to the nozzle 56. The benefit of having the actuator supply only a portion of the total fuel flow rate to the premixer is that it reduced the average flow rate through the actuator, thereby making the actuator easier to design and manufacture, while still reducing combustion instability. The premixer provided a mixture having a spatially uniform but temporally modulated fuel to air ratio.

A solenoid valve, P/N 9-967-901, and a solenoid valve driver, Iota One, from General Valve Corporation have demonstrated suitable for the embodiment, described above, with the sub-scale burner. This solenoid valve is a version of a solenoid valve P/N 9-967-900, but it is specifically configured to have as fast a response time and as high a flow rate as possible. The valve employs a pintle/orifice arrangement. The direction of the fluid flow through the valve assists the valve in transitioning from "closed" to "open". For many valves the time required for the valve to "open" is more dependent on the direction of the fluid flow than is the time required for the valve to "close". The valve driver receives the command signal from the controller and produces a signal that causes the valve to "open" or "close" accordingly. When the command signal represents an "open" command, the valve driver initially responds by providing a high voltage, e.g., 300 volts, to the solenoid valve to hasten the valve's transition from the "closed" state to the "open" state. After about 500 microseconds, the voltage drops to a magnitude merely sufficient to maintain the solenoid valve in the "open" position.

There are many possible configurations for modulating the fuel flow rate to the burner 38. For example, a modulated fuel flow rate may be provided to one or more of the premixing nozzles. In addition, the modulated fuel flow rate may be provided to one or more of the fuel tubes on each nozzle. Furthermore, some of the fuel nozzles receiving a modulated fuel flow may receive more modulated fuel flow than the others.

Regardless of the configuration, the actuator 130 should have the capacity to provide the desired modulated fuel flow rate without inducing so large a pressure drop as to exhaust the available fuel supply pressure. Where appropriate, the actuator may comprise multiple actuators, for example multiple solenoid valves operating in parallel. In some embodiments, actuators similar to those used as fuel injectors in automobiles may be used instead of the solenoid valve described above. However, automobile fuel injectors typically do not enable as high a fuel flow rate as the solenoid valve described above, thus a plurality of such fuel injectors might be needed in order to provide the desired modulated fuel flow rate. Of course, more than one fuel line may be required to modulate and/or deliver the desired modulated fuel flow rate to the burner.

Although the preferred embodiment uses a solenoid valve as the fuel actuator to provide an "on/off" modulated fuel flow rate, any other suitable actuator and modulation may also be used, including but not limited to a servo valve and a sinusoidally modulated fuel flow rate.

The engine controller 34 preferably comprises a processor 150, a memory 152, an input/output (I/O) portion 154 and a bus 156 with connections 158 to each of the elements of the controller 34. A program stored in the memory 152 includes a control algorithm that directs the engine control 34 to process the sensor signal 122 and generate an appropriate command signal to the fuel system 30. The I/O portion 154 may include a filter for filtering the magnitude of the sensor signal. The filter attenuates the magnitude of frequency components that are significantly above and significantly below the fundamental frequency range. For example, in the preferred embodiment, the filter comprises an analog band pass filter that provides -3 dB attenuation at frequencies of 100 Hz and 300 Hz.

Referring now to FIG. 6, a simplified flowchart diagram 170 illustrates the step execution of the control algorithm implemented by the engine controller 34 in the preferred embodiment. The algorithm is preferably executed at substantially periodic intervals, for example, approximately every 2.5 msec. The algorithm begins at a step 172 labelled "START". At instruction step 174, the algorithm initiates a measurement, by an analog to digital (A/D) converter, of the magnitude of the filtered sensor signal to obtain a digital representation of the magnitude at that time.

At steps 176, 178, 180, the algorithm executes an incremental phase shift. The algorithm uses a phase shifter that comprises a series, 1 to n, of memory locations, collectively referred to as a memory buffer, in the memory portion 152. Each of the memory locations stores a magnitude illustratively shown as Magnitude (Location,) through Magnitude (Locationₙ). The total number, n, of memory locations in the buffer, is selected, in conjunction with the execution rate of the algorithm, to provide the desired phase shift. This type of phase shifter is well known. At step 176 the magnitude in the final memory location is transferred out of the buffer, completing the phase shift on that magnitude. At step 178 all other magnitudes previously stored in the buffer are transferred to the next respective memory location. At step 180, the algorithm stores the most recently measured magnitude in the first memory location. In the preferred embodiment, the magnitude of the phase shift is determined empirically before executing the algorithm. However, other suitable methods for determining an appropriate phase shift magnitude may also be used, including but not limited to an adaptive algorithm.

At steps 182, 184, 186, the algorithm generates a command signal based upon the magnitude for which the phase shift was most recently completed in step 176. Step 182 determines whether the magnitude is greater than a threshold magnitude e.g., zero. If so, step 184 generates a command signal having a magnitude representing an "open" command. Otherwise, step 186 generates a command signal having a magnitude representing a "close" command. Steps 184, 186 may employ a digital to analog converter to generate the command signal, which is then output to the actuator 130. The threshold magnitude may be adapted so as to result in the desired on/off duty cycle. If the oscillation is symmetrical about zero, a threshold magnitude of zero results in a 50% on/50% off duty cycle.

The algorithm exits at a step 180. With execution of this algorithm 170 over a duration, step 174 produces a series of magnitudes that collectively represent the magnitude of the filtered sensor signal over the duration. Steps 176, 178, 180 apply a time delay, or phase shift, to each magnitude produced at step 174. Steps 182, 184, 186 generate a series of command signal magnitudes, based upon the phase shifted magnitudes, that collectively represent the complete command signal over the duration.

Those skilled in the art will recognize that although the controller in the preferred embodiment comprises programmed hardware, i.e. executed in software by a computer, it may take other forms, including hardwired hardware configurations, hardware manufactured in integrated circuit form, firmware, and combinations thereof. It should also be understood that although the preferred embodiment comprises a digital system with periodically sampled signals, the present invention may also be embodied in an analog system with continuous signals, or a combination of digital and analog systems. Furthermore, although the control system in the preferred embodiment employs a constant gain and a predetermined phase shift, this does not exclude the use of an adaptive control system having a variable gain and a variable phase shift.

Referring now to FIG. 7, a graph 190 displays some of the possible benefits of the present invention. The graph 190 has two curves 192, 194 that provide information collected in the trials with the sub-scale burner. One curve 192 illustrates the magnitude of the oscillations in the combustor pressure with a preferred embodiment of the present invention being used. The other curve 194 illustrates the magnitude without the preferred embodiment of the present invention being used. As with graph 120 (FIG. 5), graph 190 represents the magnitude of the oscillations as a plurality of frequency components, each having a different magnitude compared to that of the others. The magnitudes are expressed in dB relative to a reference magnitude using a formula 20 log (peak-to-peak magnitude/reference magnitude). A comparison of the curves 192, 194 indicates that the present invention provided a 14 dB reduction in the magnitude of the oscillations in the combustor pressure.

Referring now to FIG. 8 another graph 200 displays some of the other benefits of the preferred embodiment of the present invention. The graph 200 has two curves 202, 204 that provide information collected in the trials with the sub-scale burner. One curve 202 illustrates the magnitude of the oscillations in the combustor pressure at various fuel to air mixture ratios with a preferred embodiment of the present invention being used. The other curve 204 illustrates the magnitude at various ratios without the preferred embodiment of the present invention being used. Point A on each curve 202, 204 represents a fuel to air equivalence ratio of 0.47 (note that 1.0 corresponds to a stoichiometric ratio). Point B on each curve represents a ratio of 0.49; point C represents a ratio of 0.51; point D represents a ratio of 0.53; point E represents a ratio of 0.56. Other points 206 illustrate the magnitude without the preferred embodiment of the present invention but with various pilot injection rates. All of these points 206 represent a 0.49 fuel to air equivalence ratio. A horizontal dotted line 208 indicates a suitable magnitude limit for the oscillations. The magnitudes of the oscillations are expressed in dB relative to a reference magnitude using a formula 20 log (peak-to-peak magnitude/reference magnitude).

The curves 202, 204 and points 206 also indicate the amount of NOx produced for each situation. A vertical dotted line 210 indicates a suitable magnitude limit for the amount of NOx produced.

A comparison of the curves 202, 204 indicates that the preferred embodiment of the present invention provides a reduction in the magnitude of the oscillations regardless of the fuel to air ratio. The comparison also indicates that the preferred embodiment of the present invention achieves performance that simultaneously satisfies the magnitude limits 208, 210 for oscillation and NOx production.

The present invention demonstrates that premixing is not inappropriate to modulation of the fuel flow rate to the combustor. The inherent mixing provided by a premixer does not neutralize the modulations in the fuel flow rate, even though the residence time of the fuel within the premixing nozzle may be greater than the period of the modulation. This is true even when the modulated fuel flow rate comprises only a small portion, e.g., one half, one third, or one sixth, of the total fuel flow rate to the premixer.
INSERT X HERE

While the particular invention has been described with reference to a preferred embodiment, this description is not meant to be construed in a limiting sense. Various modifications of the preferred embodiment, as well as additional embodiments of the invention, will be apparent to persons skilled in the art upon reference to this description, without departing from the scope of the invention, as defined in the claims appended hereto. Thus, for example, although the preferred embodiment discloses the use of the present invention for controlling combustion instability, the present invention is not limited to such. Rather, the present invention may be used for any suitable application. It is therefore contemplated that the appended claims will cover any such modifications or embodiments as fall within the true scope of the invention.

## Claims

1. Apparatus for use in a system having a liquid fuel supply (100) and a combustor (48) that burns a mixture of liquid fuel and air, the apparatus comprising:
a fuel actuator (130) that receives liquid fuel from the liquid fuel supply (100) and provides, in response to a command signal, liquid fuel at a modulated rate of flow;
a controller (34) that generates said command signal corresponding to said modulated rate of flow; and
a premixer (44) that receives said modulated liquid fuel flow from said fuel actuator, mixes the liquid fuel with air, and provides the liquid fuel and air mixture to the combustor (48).

2. Apparatus as claimed in claim 1, wherein the system further includes a sensor (122) that provides a sensor signal indicative of oscillations in the magnitude of the pressure within the combustor (48), said controller (34) provides said command signal in response to said sensor signal, and burning of said mixture within the combustor (48) effects a reduction in the magnitude of said oscillations.

3. Apparatus as claimed in claim 1 or claim 2, wherein said modulated rate of flow has a cycle period and said premixer (44) has a mixing chamber (62) and wherein the residence time of the fuel within said mixing chamber (62) is at least of the same order of magnitude as the cycle period of said modulated rate of flow.

4. Apparatus as claimed in any of claims 1 to 3, wherein said premixer (44) has a mixing chamber (62) and the residence time of the fuel within said mixing chamber (62) is at least about 4 msec.

5. Apparatus as claimed in any preceding claim, wherein the fuel provided by the actuator (130) to the premixer (44) represents only a portion of the fuel flow to the premixer (44), the other portion comprising a fuel flow at a quasi-steady rate.

6. Apparatus as claimed in any preceding claim, wherein the average rate of the modulated fuel flow is in the range of about 0.001 to about 0.33 that of the total fuel flow to the combustor (48).

7. Apparatus as claimed in any preceding claim, wherein the average rate of the modulated fuel flow is the range of about 0.01 to about 0.16 that of the total fuel flow to the combustor (48).

8. Apparatus as claimed in any preceding claim, wherein the equivalent fuel to air ratio of the mixture is in the range of from about 0.4 to about 0.6.

9. Apparatus as claimed in any preceding claim, wherein said controller (34) comprises:
means for measuring said sensor signal to produce a measured signal indicative of the magnitude of the pressure within the combustor;
means for generating a phase shifted signal from said measured signal; and
means for generating said command signal from said phase shifted signal.

10. Apparatus as claimed in any preceding claim, wherein said system is a gas turbine power plant, the apparatus additionally comprising:
a gas turbine engine (22) having a compressor (36), a burner (38), and a turbine (40), said burner (38) having said premixer (44) and said combustor (48), said premixer (44) receiving and mixing compressed air from said compressor (36) with said modulated liquid fuel flow from said fuel actuator (130) to produce a fuel and air mixture, said combustor (48) receiving and burning said fuel and air mixture, and said turbine (40) receiving products of said burning.

11. A controller (34) for use with a system having a fuel actuator (130) that receives liquid fuel and a command signal and provides, in response to the command signal, liquid fuel at a modulated flow rate, the system further having a premixer (44) that receives the modulated liquid fuel flow from the fuel actuator (130), mixes the liquid fuel with air, and provides the liquid fuel and air mixture to a combustor (48), the controller (34) comprising:
means for determining the actuation sought from the fuel actuator (130) to cause the actuator to provide liquid fuel at the modulated flow rate; and
means for generating a command signal indicative of said actuation sought from the fuel actuator.

12. A controller as claimed in claim 11, wherein the system further includes a sensor (122) that provides a sensor signal indicative of oscillations in the magnitude of the pressure within the combustor (48), wherein said means for determining determines the actuation sought in response to said sensor signal, and burning of the mixture within the combustor (48) effects a reduction in the magnitude of said oscillations.

13. A controller as claimed in claim 11 or claim 12, wherein said means for determining comprises:
means for measuring said sensor signal to produce a measured signal indicative of the magnitude of the pressure within the combustor; and
means for generating a phase shifted signal from said measured signal.

14. A controller as claimed in any of claims 11 to 13, wherein said means for generating a command signal comprises means for receiving said phase shifted signal and generating therefrom a command signal.

15. A controller as claimed in claim 14, wherein said means for receiving said phase shifted signal and generating therefrom a command signal comprises means for comparing said phase shifted signal to a threshold magnitude and depending on the result, generating a command signal having a magnitude representing either an open command or a close command.
